# EUROPÄISCHE PATENTSCHRIFT

(11) **EP 2 304 257 B1**
(45) Veröffentlichungstag und Bekanntmachung des Hinweises auf die Patenterteilung: **09.09.2015**
(21) Anmeldenummer: 09765439.6
(22) Anmeldetag: 10.06.2009
(51) Int. Cl.: F16C 32/04

(54) **MAGNETLAGER MIT HOCHTEMPERATUR-SUPRALEITERELEMENTEN**
MAGNETIC BEARING WITH HIGH-TEMPERATURE SUPERCONDUCTOR ELEMENTS
PALIER MAGNÉTIQUE À ÉLÉMENTS SUPRACONDUCTEURS À HAUTE TEMPÉRATURE

(30) Priorität: 18.06.2008 DE 102008028588
(43) Veröffentlichungstag der Anmeldung: 06.04.2011
(73) Patentinhaber: Schaeffler Technologies AG & Co. KG, 91074 Herzogenaurach (DE)
(72) Erfinder: SCHWARZ, Sergej, 90491 Nürnberg (DE)
(86) Internationale Anmeldenummer: PCT/DE2009/000813
(87) Internationale Veröffentlichungsnummer: WO 2009/152803

(56) Entgegenhaltungen:
- DE-A1- 4 436 831
- JP-A- 1 003 320
- JP-A- 1 141 224
- US-A- 5 196 748
- US-A- 5 517 071

## Beschreibung

### Gebiet der Erfindung

Die Erfindung betrifft ein Magnetlager, nach Anspruch 1 mit Hochtemperatur-Supraleiterelementen.

Aus dem Stand der Technik sind Magnetlager bekannt, bei denen ein Rotor in einem Stator drehbar aufgenommen und in axialer sowie radialer Richtung gelagert ist. Da nach dem Earnshaw-Theorem eine dauerhafte Lagerung des Rotors durch den Stator nur mit Permanent-Magneten nicht möglich ist, sehen sogenannte aktive Magnetlager eine ständige Nachregelung des Stators vor. Damit ermöglichen aktive Magnetlager zwar eine weitgehend reibungsarme Lagerung des Rotors, können relativ hohe Lagerkräfte aufnehmen und weisen eine relativ hohe Steifigkeit auf, erfordern allerdings einen hohen Steuerungs- und Regelungsaufwand.

Aus dem Stand der Technik sind weiter Magnetlager bekannt, bei denen entweder dem Rotor oder dem Stator ein supraleitendes Element zugeordnet ist.

JP 01141222 AA (Abstract) beschreibt ein Magnetlager, bei dem ein supraleitendes Material an einem Schaftabschnitt der Welle eines Rotors befestigt ist, und wobei der Stator zwei ebenfalls supraleitende Spulen umfasst, die den Rotor radial lagern. Zur axialen Lagerung des Rotors sind zwei weitere Spulen aus einem supraleitenden Material sowie Sensoren vorgesehen, die die axiale und radiale Verlagerung des Rotors in dem Stator erfassen. Als Ergebnis der Messwerte der Sensoren werden die Spulen zur axialen sowie die Spulen zur radialen Lagerung des Rotors angesteuert und geregelt. Das Magnetlager umfasst damit für die radiale und die axiale Lagerung zwei voneinander unabhängige Spulensysteme, die eine zusätzliche Steuerung und Regelung zur Abstimmung erforderlich macht. Insgesamt erfordert das Magnetlager einen Mess- und einen Steuerkreis, so dass keine Selbstregelung vorliegt. Die Materialien für die Drähte der supraleitenden Spulen sind supraleitende Metalle oder deren Legierungen, die sehr niedrige Temperaturen (unter ca. 10 K) erfordern, so dass eine aufwendige Kühlung vorzusehen ist, um das Magnetlager betreiben zu können.

JP 01030920 AA (Abstract) beschreibt ein Magnetlager, bei dem an dem Rotor eine Anregungs-Spule und an dem Stator ein supraleitendes Material vorgesehen ist. Befindet sich das supraleitende Material im supraleitenden Zustand und stoppt der Rotor, wird in der Anregungs-Spule ein Gleichstrom erzeugt, der ein Magnetfeld bewirkt, das den Rotor von dem Stator beabstandet hält. Das Magnetlager wirkt dabei als sich selbst aktivierendes Fanglager.

JP 01026018 AA (Abstract) beschreibt ein Magnetlager, bei dem an der Mantelfläche des Rotors ein Magnet angeordnet ist und der Stator eine hochtemperatur-supraleitende Spule umfasst. Vibriert der Rotor oder verlagert sich der Rotor von seiner Soll-Drehachse, werden in der supraleitenden Spule Wirbelströme induziert, deren Magnetfeld auf den Rotor eine rückstellende Kraft ausübt.

US 7,012,347 B2 beschreibt einen supraleitenden Rotor mit einer Kühlvorrichtung, wobei der supraleitende Rotor eine supraleitende Feld-Spule umfasst.

US 5,256,637 A beschreibt in einem ersten Ausführungsbeispiel ein supraleitendes Magnetlager, bei dem supraleitende Spulen aus einem hochtemperatur-supraleitenden Material sowohl an dem Rotor wie auch an dem Stator vorgesehen sind. Ein zweites Ausführungsbeispiel sieht sowohl supraleitende als auch normalleitende Spulen vor, wobei die supraleitenden Spulen im wesentlichen statische Kräfte und die normalleitenden Spulen dynamische Kräfte wie Vibrationen aufnehmen; hierzu sind die normalleitenden Spulen wie bei einem aktiven Magnetlager angesteuert und geregelt.

EP 1 884 671 A1 beschreibt ein Magnetlager, bei dem der Rotor in axialer Richtung mittels einer supraleitenden Spule und in radialer Richtung mittels einer weiteren Spule gelagert ist. Die weitere Spule wirkt mit einem ferromagnetischen Abschnitt zusammen, der an dem Korpus des Rotors fest angeordnet ist.

JP 57083141 AA (Abstract) beschreibt ein Magnetlager, bei dem eine supraleitende Spule an dem Stator und eine weitere supraleitende Spule an dem Rotor angeordnet ist. Die supraleitende Spule an dem Rotor geht nur dann in den supraleitenden Zustand über, wenn der Rotor abgebremst wird, so dass in diesem Fall das Magnetlager, als sich selbst aktivierendes Fanglager wirkt.

JP 07293564 AA (Abstract) beschreibt ein Magnetlager, das eine magnetische Drosseldüse umfasst, die den Fluss des Magnetfeldes zwischen dem Rotor und dem Stator beeinflusst, um die Steifigkeit des Lagers einstellen und nachführen zu könnten.
DE 102 36 471 A1 beschreibt ein Magnetlager, bei dem an dem Rotor ein permanentmagnetisches Element mit Flussführungselementen und an dem Stator ein hochtemperatur-supraleitendes Material angeordnet ist.

JP 01203715 AA (Abstract) beschreibt ein Magnetlager, bei dem ein Draht aus einem supraleitenden Material Teil eines Stators ist, der einen Rotor abstützt, der einen permanentmagnetischen Abschnitt aufweist.

JP 01055038 AA (Abstract) beschreibt ein axiales Magnetlager, bei dem der Rotor eine Spule aufweist, und wobei der Stator einen Supraleiter aus einer metallischen Legierung umfasst. Der Meißner-Ochsenfeld-Effekt bewirkt dabei eine abstoßende Kraft zwischen dem Magnetfeld der Spule des Rotors und dem supraleitenden Stator.

EP 1 835 188 A1 beschreibt ein Magnetlager, bei dem an dem Rotor radial verschiebliche permanentmagnetische Segmente angeordnet sind und bei dem der Stator aus einem hochtemperatur-supraleitendem, insbesondere keramischen Material, das insgesamt eine zylindrische Form aufweist.

JP 07091447 AA (Abstract) beschreibt ein Magnetlager, das mittels radial einer Wechselwirkung zwischen Permanentmagneten und axial mittels einer Wechselwirkung zwischen Permanentmagneten und Supraleitern abstützt. Dabei sind die Permanentmagnete an dem Rotor angeordnet, und die Supraleiter an dem Stator.

JP 10306824 AA (Abstract) beschreibt ein axial wirkendes Magnetlager, bei dem ein Supraleiter an dem Stator angeordnet ist und der Rotor in einem Gasdrucklager radial abgestützt ist. Mit dem Supraleiter wirkt ein permanentmagnetisches Element an dem Rotor bei der axialen Abstützung zusammen,

DE 692 27 161 T2 beschreibt ein Magnetlager, bei dem an dem Rotor Permanentmagnete befestigt sind, die mit supraleitenden Abschnitten an dem Stator zusammenwirken, so dass eine radiale und axiale Lagerung entsteht.

Aus der WO 2008/036073 A2 sind allgemein supraleitende Spulen bzw. Drähte bekannt, insbesondere ist das Kernmaterial der Spulen bzw. Drähte ein Hochtemperatur-Supraleiter auf keramischer Basis.

US 5,517,071 A beschreibt ein Magnetlager mit Merkmalen des Oberbegriffs des Anspruchs 1. US 5,517,071 A beschreibt nämlich ein Magnetlager mit einem Rotor und einem Stator, wobei an dem Rotor ein Korpus eines Supraleitermaterials aufgenommen ist, und wobei der Stator eine Spule aus einem supraleitenden Material umfasst.

### Aufgabe der Erfindung

Es ist die Aufgabe der Erfindung, ein Magnetlager mit Hochtemperatur-Supraleiter-Elementen anzugeben, das eine hohe Tragfähigkeit und Steifigkeit aufweist und keine zusätzliche aktive Regelung erforderlich macht.

### Zusammenfassung der Erfindung

Diese Aufgabe wird erfindungsgemäß durch ein Magnetlager nach Anspruch 1 gelöst.

Die Spule aus dem hochtemperatur-supraleitenden Material als Stator des Magnetlagers ermöglicht eine hohe Stromdichte, so dass ein starkes Magnetfeld zwischen dem Stator und dem Rotor gebildet wird.

In diesem Magnetfeld zeigt der Typ-2-Supraleiter, insbesondere das Korpus des Hochtemperatur-Supraleiters an dem Rotor, den Meißner-Ochsenfeld-Effekt nur unvollständig; speziell dringt das Magnetfeld in das Korpus des Typ-2-Supraleiters abschnittsweise in Form von normalleitenden Flussschläuchen (Vortizes) ein, die von supraleitenden Bereichen umgeben sind. Bei der Bewegung des Rotors relativ zu dem Magnetfeld bewegen sich die Vortizes, bis diese an Defekten in dem Korpus festgehalten werden (sog. Pinning). Die festgehaltenen Vortizes hindern dann eine weitere radiale oder axiale Bewegung des Rotors in dem Stator, so dass eine stabile, sich selbst ausrichtende Lagerung entsteht, denn die Haltekräfte der festgehaltenen Vortizes sind umso stärker, je stärker der Rotor bewegt wird bzw. je mehr Vortizes vorhanden sind. Die Anzahl der Vortizes nimmt zu, wenn das an der Stelle des Korpus des Typ-2-Supraleiters wirkende Magnetfeld aufgrund der supraleitenden Spulen stärker wird, also insbesondere dann, wenn der Rotor sich auf den Stator hin bewegt, speziell also wenn zusätzliche Kräfte den Rotor aus dessen Soll-Stellung relativ zu dem Stator auslenken.

Insgesamt ergibt sich eine selbst-steuernde und selbst-regelnde Lagerung des Rotors in Bezug auf den Stator, wobei die supraleitenden Spulen des Stators, insbesondere bei der Verwendung einer Spule mit einem Kern aus einem hochtemperatur-supraleitenden keramischen Material für den Stator in dem Magnetlager, die besonders hohe kritische Stromdichte der hochtemperatur-supraleitenden Keramiken wirksam wird, aufgrund derer ein besonders hohes Magnetfeld zwischen dem Stator und dem Rotor entsteht, das wiederum auch im statischen Fall eine hohe Anzahl von Vortizes in dem supraleitenden Korpus an dem Rotor erzeugt. Insbesondere lassen sich durch die Spulen aus der hochtemperatur-supraleitenden Keramik Magnetfelder erzeugen, die durch normalleitende Spulen bzw. mittels Permanentmagneten alleine nicht erreichen lassen.

Vorzugsweise ist das Material des Korpus des Typ-2-Supraleiters an dem Rotor, besonders bevorzugt auch das Material des Kern der supraleitenden Spule des Stators ein Hochtemperatursupraleiter, wie sie derzeit für Hochtemperatursupraleiter auf keramischer Basis bekannt sind. Die hohen Sprungtemperaturen der Hochtemperatursupraleiter oberhalb des Siedepunktes von flüssigem Stickstoff ermöglichen eine effektive, energiesparende Kühlung des Magnetlagers.

Vorzugsweise ist vorgesehen, dass die Sprungtemperatur des Materials des Korpus des Typ-2-Supraleiters an dem Rotors und des Materials der Spule vergleichbar ist, so dass für den Rotor und den Stator ein gemeinsamer Kühlkreislauf vorgesehen sein kann.

Es ist vorgesehen, dass der Stator einen Ferromagneten umfasst, Dabei überlagert sich das magnetische Feld des Ferromagneten mit dem Feld der Spule, so dass beispielsweise an den Endabschnitten des Rotors, an denen verstärkt Auslenkungen aus der Ruhestellung auftreten, das Magnetfeld der Spule durch das Magnetfeld des Ferromagneten verstärkt wird und zusätzliche Vortizes in dem Korpus an dem Rotor eine besonders hohe Haltekraft an den Endabschnitten ermöglichen.

Es versteht sich, dass anstelle oder ergänzend zu dem Ferromagneten auch eine zusätzliche Spule vorgesehen sein kann, die normalleitend oder ebenfalls supraleitend ausgebildet ist, und deren Magnetfeld an der Stelle des Korpus des Typ-2-Supraleiters das Magnetfeld der Spule des Stators überlagert und moduliert.

Es ist vorgesehen, dass der Stator mehrere Spulenwindungen umfasst, und wobei jeweils ein ferromagnetischer Werkstoff zwischen zwei benachbarten Spulenwindungen angeordnet ist. Der mindestens eine Ferromagnet zwischen den mindestens zwei Spulenwindungen moduliert dabei der im wesentlichen radial homogene Magnetfeld der mindestens zwei Spulenwindungen derart, dass das resultierende Magnetfeld in radialer Richtung inhomogen wird. Die Inhomogenität speziell in radialer Richtung ermöglicht dann, auf Änderungen der radialen Stellung des Rotors relativ zu dem Stator mit einer verstärkten Rückstellkraft zu reagieren, so dass das Magnetlager insgesamt eine verbesserte Steifigkeit erhält.

Weitere Vorteile und Merkmale der Erfindung ergeben sich aus der nachfolgenden Beschreibung von zwei Ausführungsbeispielen sowie aus den abhängigen Ansprüchen.

Die Erfindung wird im folgenden unter Bezugnahme auf die anliegenden Zeichnungen näher beschrieben und erläutert.

### Kurze Beschreibung der Zeichnungen

- Fig. 1: zeigt eine schematische Querschnittsansicht eines ersten Ausführungsbeispiels eines Magnetlagers nach dem Stand der Technik, und
- Fig. 2: zeigt eine schematische Querschnittsansicht eines zweiten Ausführungsbeispiels eines erfindungsgemäßen Magnetlagers.

### Detaillierte Beschreibung der Zeichnung

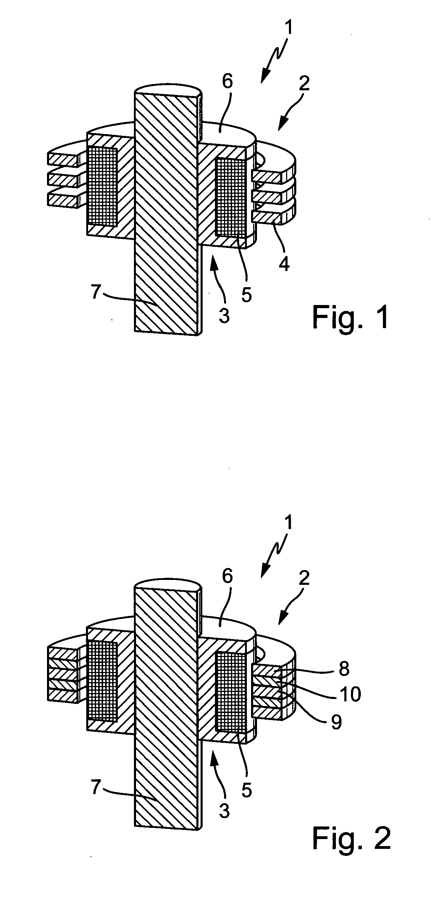

Fig. 1 zeigt ein Magnetlager 1 mit einem Stator 2 und einem Rotor 3, wobei der Rotor 3 bezüglich des Stators 2 drehbar und in dem Stator 2 axial und radial gelagert ist. Der Stator 2 umfasst eine Spule 4 mit einem stromtragenden Bereich, dem Kern, aus einem supraleitenden Material, wobei von der Spule 4 nur drei Spulenwindungen schematisch dargestellt sind.

Der Rotor 3 umfasst ein ringförmiges, den Rotor 3 umgebendes Korpus 5 aus einem Typ-2-Supraleiter, insbesondere aus einem Hochtemperatur-Supraleiter, speziell aus einem keramischen Material wie YBCO. Das Material des Korpus 5 entspricht beispielsweise dem Material des Kerns der Spule 4, so dass die Spule 4 und das Korpus 5 im wesentlichen die gleiche Sprungtemperatur aufweisen, Das Korpus 5 ist in einer Aufnahme 6 aus einem nicht-magnetischen Material angeordnet, wobei die Aufnahme 6 an einer in dem Stator 2 gelagerten Welle 7 befestigt ist. Die radiale Erstreckung des Korpus 5 ist so gewählt, dass das Magnetfeld der Spule 4 in dem Korpus 5 so weit eindringen kann, dass sich ein selbststabilisierender Effekt ausbilden kann, insbesondere also so, dass Flussschläuche (Vortizes) des Magnetfeldes der Spule 4 in dem Korpus 5 ausgebildet werden. Weiter weist das Korpus 5 kristalline Defekte auf, an denen die Vortizes festgehalten werden, so dass sich die Vortizes in dem Korpus 5 nicht ohne Widerstand bewegen.

Die Spule 4 befindet sich in einem supraleitenden Zustand und trägt einen vergleichsweise hohen Strom, der in der Spule 4 im wesentlichen verlustfrei geführt wird und an der Stelle des Korpus 5 an dem Rotor 3 ein hohes Magnetfeld erzeugt. Durch eine nicht dargestellte Kühlvorrichtung wird das Korpus 5 unter die Sprungtemperatur des YBCO abgekühlt, so dass das Korpus 5 supraleitend wird. Die zuvor abgekühlte und supraleitende Spule 4 bildet ein Magnetfeld im Bereich des Korpus 5 aus, das insoweit inhomogen ist und eine Komponente senkrecht zu der Oberfläche des Korpus 5 aufweist, dass sich Vortizes in dem Korpus 5 ausbilden, die bei der weiteren Bewegung des Rotors 3 relativ zu dem Stator 2 räumlich fixiert werden und der Bewegung ein Hindernis entgegensetzen.

Die Spule 4 an dem Stator 2 des Magnetlagers hat dabei die Wirkung, nicht nur eine radiale Lagerung, sondern über das Pinning der Vortizes in dem Korpus 5 des Typ-2-Supraleiters an dem Rotor 3 auch eine axiale Lagerung des Rotors 3 zu ermöglichen. Eine weitere Vorrichtung speziell zur axialen Lagerung des Rotors 3 in dem Stator 2, insbesondere eine oder mehrere normal- oder supraleitende Spulen zur ausschließlich axialen Lagerung des Rotors 3, sind damit überflüssig.

Bei dem in Fig. 2 dargestellten zweiten Ausführungsbeispiel bezeichnen gleiche Bezugsziffern gleiche oder in der technischen Wirkung vergleichbare Teile, Es sollen im folgenden insbesondere die Unterschiede zu dem ersten Ausführungsbeispiel herausgestellt werden.

Der Rotor 3 in Fig. 2 entspricht dem oben, zu Fig. 1 diskutierten Rotor. Die Spule 4 des Stators 2 in Fig. 2 weist zusätzlich zwischen zwei benachbarten Spulenwindungen 8, 9 einen Ferromagneten 10 auf, z. B. aus Eisen, dessen Magnetfeld sich mit dem Magnetfeld der Spule 4 überlagert, so dass ein radialer Gradient des Magnetfeldes verstärkt wird. Dieser verstärkte radiale Gradient des Magnetfeldes der Spule 4 bewirkt eine stärkere Rückstellkraft, sofern der Rotor 3 aus der dargestellten Soll-Stellung relativ zu dem Stator 2 ausgelenkt wird.

Das in Fig. 2 dargestellte zweite Ausführungsbeispiel weist damit im Vergleich zu dem in Fig. 1 dargestellten ersten Ausführungsbeispiel eine höhere Steifigkeit auf.

Bei dem zweiten Ausführungsbeispiel ist zwischen je zwei benachbarten Spulenwindungen je ein Ferromagnet angeordnet. Es versteht sich, dass nicht unbedingt vorgesehen sein muss, dass zwischen der nächsten Spulenwindung der Ferromagnet angeordnet zu sein braucht; es kann auch vorgesehen sein, dass der Ferromagnet jeweils erst bei der übernächsten, dritten, vierten usw. Spulenwindung angeordnet ist, um den radialen Gradienten zu verstärken, Es versteht sich weiter, dass ein Ferromagnet auch nur an bestimmten Spulenwindungen, speziell an den Endabschnitten der Spule, vorgesehen ist, Sind zwei oder mehr Ferromagnete vorgesehen, versteht es sich weiter, dass die Dimensionierung der Ferromagnete nicht gleich zu sein brauchen, insbesondere können an den Enden der Spule 4 stärkere Ferromagnete vorgesehen sein.

Bei dem vorstehend beschriebenen zweiten Ausführungsbeispiel war der Ferromagnet 10 durch einen ferromagnetischen Körper mit einer permanenten Magnetisierung ausgebildet. Es versteht sich, dass der Ferromagnet 10 ebenfalls durch eine weitere Spule, beispielsweise aus einem normalleitenden Material, ausgebildet sein kann, die zusätzlich zu der supraleitenden Spule 4 vorgesehen ist. Der Abstand der Windungen dieser zusätzlichen Spule untereinander bzw. zu dem Rotor 3 kann entlang der Erstreckung der zusätzlichen Spule variieren, so dass die zusätzliche Spule ein inhomogenes Magnetfeld zusätzlich zu der supraleitenden Spule 4 liefert. Es versteht sich, dass die zusätzliche Spule ebenfalls supraleitend ausgebildet sein kann.

Bei den vorstehend beschriebenen beiden Ausführungsbeispielen war die supraleitende Spule 4 durch eine einzelne Spule gebildet. Es versteht sich, dass zwei oder mehr supraleitende Spulen vorgesehen sein können, die entlang der Erstreckung des Rotors 3 benachbart sind oder zumindest abschnittsweise ineinander angeordnet sind, ohne sich zu berühren. In dem Bereich, in dem die beiden supraleitenden Spulen ineinander angeordnet sind, verstärkt sich das in dem Korpus 5 des Typ-2-Supraleiters an dem Rotor 3 wirkende Magnetfeld; speziell kann das resultierende Magnetfeld der zwei oder mehr supraleitenden Spulen eine radiale Inhomogenität des resultierenden Magnetfeldes erzeugen, die die Steifigkeit sowie die Tragfähigkeit des Magnetlagers verbessert.

Bei den vorstehend beschriebenen Ausführungsbeispielen war die Aufnahme 6 aus einem nicht-magnetischen Material ausgebildet. Es versteht sich, dass die Aufnahme 6 aus einem magnetischen oder magnetisierbaren Material ausgebildet sein kann, um das Magnetfeld der supraleitenden Spule 4 derart zu modulieren, dass das Magnetfeld eine Komponente erhält, die möglichst senkrecht zu der Oberfläche des Korpus 5 steht, so dass die Bildung von Vortizes in dem Korpus 5 erleichtert wird.

### Bezugszeichenliste

- 1: Magnetlager
- 2: Stator
- 3: Rotor
- 4: Spule
- 5: Korpus
- 6: Aufnahme
- 7: Welle
- 8: erste Spulenwindung
- 9: zweite Spulenwindung
- 10: Ferromagnet

## Patentansprüche

1. Magnetlager mit Hochtemperatur-Supraleiterelementen, umfassend
einen Stator (2), und
einen bezüglich des Stators (2) drehbar aufgenommenen Rotor (3), der in dem Stator (2) axial und radial selbstregelnd gelagert ist,
wobei an dem Rotor (3) ein Korpus (5) aus einem Typ-2-Supraleiter vorgesehen ist,
wobei der Stator (2) eine Spule (4) aus einem supraleitenden Material umfasst,
wobei der Stator (2) einen Ferromagneten (10) umfasst, und
wobei der Stator (2) mehrere Spulenwindungen (8, 9) umfasst,
**dadurch gekennzeichnet, dass** der Ferromagnet (10) zwischen zwei Spulenwindungen (8, 9) angeordnet ist.

2. Magnetiager nach Anspruch 1, wobei der Typ-2-Supraleiter ein Hochtemperatur-Supraleiter ist.

3. Magnetlager nach Anspruch 1 oder 2, wobei das supraleitende Material der Spule (4) ein Hochtemperatur-Supraleiter ist.

4. Magnetlager nach einem der Ansprüche 1 bis 3, wobei das Material des Korpus (5) des Typ-2-Supraleiters an dem Rotor (3) und das Material der Spule (4) jeweils eine hochtemperatur-supraleitende Keramik ist.

5. Magnetlager nach einem der Ansprüche 1 bis 4, wobei die Sprungtemperatur des Materials des Korpus (5) des Rotors (3) und des Materials der Spule (4) im wesentlichen gleich ist.

6. Magnetlager nach einem der Ansprüche 1 bis 5, **dadurch gekennzeichnet, dass** der Stator (2) eine zusätzliche Spule umfasst,

## Claims

1. Magnetic bearing with high-temperature superconductor elements, comprising
a stator (2), and
a rotor (3) which is held such that it can rotate with respect to the stator (2) and is borne in a self-regulating manner axially and radially in the stator (2),
wherein a body (5) comprising a type-2 superconductor is provided on the rotor (3),
wherein the stator (2) has a coil (4) composed of a superconducting material,
wherein the stator (2) has a ferromagnet (10), and
wherein the stator (2) has a plurality of coil turns (8, 9), **characterized in that** the ferromagnet (10) is arranged between two coil turns (8, 9).

2. Magnetic bearing according to Claim 1,
wherein the type-2 superconductor is a high-temperature superconductor.

3. Magnetic bearing according to Claim 1 or 2,
wherein the superconducting material of the coil (4) is a high-temperature superconductor.

4. Magnetic bearing according to one of Claims 1 to 3,
wherein the material of the body (5) of the type-2 superconductor on the rotor (3), and the material of the coil (4), are in each case a high-temperature superconducting ceramic.

5. Magnetic bearing according to one of Claims 1 to 4,
wherein the critical temperature of the material of the body (5) of the rotor (3) and of the material of the coil (4) is essentially the same.

6. Magnetic bearing according to one of Claims 1 to 5, **characterized in that** the stator (2) has an additional coil.

## Revendications

1. Palier magnétique à éléments supraconducteurs à haute température, comprenant
un stator (2) et
un rotor (3) reçu de manière rotative par rapport au stator (2), lequel est supporté de manière auto-ajustable axialement et radialement dans le stator (2), un corps (5) constitué d'un supraconducteur de type 2 étant prévu sur le rotor (3),
le stator (2) comprenant une bobine (4) constituée d'un matériau supraconducteur,
le stator (2) comprenant un aimant ferromagnétique (10), et
le stator (2) comprenant plusieurs enroulements de bobine (8, 9),
**caractérisé en ce que** l'aimant ferromagnétique (10) est disposé entre deux enroulements de bobine (8, 9).

2. Palier magnétique selon la revendication 1, dans lequel le supraconducteur de type 2 est un supraconducteur à haute température.

3. Palier magnétique selon la revendication 1 ou 2, dans lequel le matériau supraconducteur de la bobine (4) est un supraconducteur à haute température.

4. Palier magnétique selon l'une quelconque des revendications 1 à 3, dans lequel le matériau du corps (5) du supraconducteur de type 2 sur le rotor (3) et le matériau de la bobine (4) sont chacun une céramique supraconductrice à haute température.

5. Palier magnétique selon l'une quelconque des revendications 1 à 4, dans lequel la température de transition du matériau du corps (5) du rotor (3) et du matériau de la bobine (4) est essentiellement la même.

6. Palier magnétique selon l'une quelconque des revendications 1 à 5, **caractérisé en ce que** le stator (2) comprend une bobine supplémentaire.
